# EUROPEAN PATENT SPECIFICATION

(11) **EP 4 336 638 B1**
(45) Date of publication and mention of the grant of the patent: **03.06.2026**
(21) Application number: 22846177.8
(22) Date of filing: 18.07.2022
(51) Int. Cl.: H01M 50/284, H01M 50/595, H01M 50/588, H01M 50/213, H01M 50/242, H01M 10/42, H01M 10/48, H01M 50/574

(54) **CELL ASSEMBLY**
ZELLENANORDNUNG
ENSEMBLE CELLULE

(30) Priority: 19.07.2021 KR 20210094421; 24.12.2021 KR 20210187334; 15.07.2022 KR 20220087607
(43) Date of publication of application: 13.03.2024
(73) Proprietor: LG Energy Solution, Ltd., Seoul 07335 (KR)
(72) Inventor: JEON, Ji Hye, Daejeon 34122 (KR)
(74) Representative: Plasseraud IP
(86) International application number: PCT/KR2022/010473
(87) International publication number: WO 2023/003307

(56) References cited:
- CN-A- 101 764 251
- GB-A- 2 438 437
- JP-A- 2002 298 809
- KR-A- 20070 067 778
- KR-A- 20090 078 181
- KR-A- 20110 005 580
- KR-A- 20120 089 412
- US-A1- 2016 336 551

## Description

### TECHNICAL FIELD

The present disclosure relates to a cell assembly, and more particularly, to a cell assembly capable of safely protecting an element member therein.

### BACKGROUND ART

In general, a cell assembly has a detachable structure that is capable of being freely mounted and detached from an external device or has a built-in structure embedded in the external device in accordance with the type of external device. For example, a cell assembly having a detachable structure is mainly used in an external device such as a notebook computer and the like, and a cell assembly having a built-in structure is mainly used in an external device such as a smart phone, a smart pad, and the like.

Here, a battery provided in the cell assembly has a risk of heat generation or explosion due to overcharging or overcurrent. Thus, to control the abnormal state of the battery, an element such as a protection circuit module (PCM) may be provided in the cell assembly.

However, since durability of the element is weak, the element may be easily broken or damaged when the cell assembly drops, or an external impact is applied to the cell assembly. Therefore, the element may not properly control the battery, and thus the battery may not operate normally.

An example of such a prior art is presented in Patent Document 1 below.

(Patent Document 1) KR10-1650030 B

Other cell assemblies are disclosed in US 2016/336551 A1, CN 101 764 251 A and GB 2 438 437 A

### DISCLOSURE OF THE INVENTION

### TECHNICAL PROBLEM

The present disclosure provides a cell assembly capable of reducing an impact applied to an element member therein.

The present disclosure also provides a cell assembly capable of improving durability by protecting an element member therein.

### TECHNICAL SOLUTION

In accordance with an exemplary embodiment, a cell assembly includes: a case constituted by a first side frame and a lower frame to define an accommodation space above the lower frame; a battery cell accommodated in the accommodation space; a cover constituted by a second side frame and an upper frame so that the second side frame is coupled to the first side frame, the cover being installed on the case to define an installation space between a lower portion of the upper frame and an upper portion of the battery cell; and an element member disposed in the installation space and spaced vertically from the upper frame.

The element member is disposed closer to the battery cell than the upper frame so that a predetermined spaced distance is defined between the upper frame and an element provided in the element member.

The element member includes: a board installed on the battery cell; and an element spaced vertically from the upper frame and installed on the board.

The predetermined spaced distance between the upper frame and the element may be approximately 0.3 mm or more to approximately 0.7 or less.

The cell assembly further includes a support member having a vertical length greater than that of the element and installed between the board and the upper frame.

At least a portion of the support member is stretchable and contractible vertically to absorb an impact.

The support member may have a path through which heat is transferred from the element member to the cover.

The board may include a printed circuit board, and the element may include a capacitor and a thermistor.

In the cell assembly, the board may include a printed circuit board, and the printed circuit board may have a hole at a center thereof, wherein the cell assembly may further include: a metal plate having an upper end, which is caught on a top surface of the printed circuit board, and a lower end, which is exposed to a bottom surface of the printed circuit board through the hole so as to be installed on the printed circuit board; and a unit cell disposed under the printed circuit board and including a welding part that is welded to at least a partial area of the metal plate, which is exposed through the hole.

The metal plate may be in direct contact with the inside of the hole of the printed circuit board, and the upper end of the metal plate may be spaced a predetermined distance from an edge of the top surface of the printed circuit board.

### ADVANTAGEOUS EFFECTS

In accordance with the exemplary embodiment, the impact applied to the element member inside the cell assembly by the external force may be reduced. As a result, the element member inside the cell assembly may be safely protected to improve the durability. Therefore, the lifespan of the cell assembly may be extended, and the maintenance of the cell assembly may be facilitated.

### BRIEF DESCRIPTION OF THE DRAWINGS

FIG. 1 is a view illustrating a structure of a cell assembly in accordance with an exemplary embodiment;
FIG. 2 is a view illustrating a structure in which an element is spaced apart from a cover in accordance with an exemplary embodiment;
FIG. 3 is a view illustrating a structure in which a support member is installed between the cover and a board in accordance with an exemplary embodiment;
FIG. 4 is a view illustrating a structure in which a support member is installed between a cover and a board in accordance with another exemplary embodiment;
FIG. 5 is a view illustrating a structure in which the support member is provided together on the cover in accordance with an exemplary embodiment;
FIG. 6 is a conceptual view illustrating a cylindrical cell assembly in accordance with a related art; and
FIG. 7 is a conceptual view illustrating a cylindrical cell assembly in accordance with an exemplary embodiment.

### MODE FOR CARRYING OUT THE INVENTION

Hereinafter, embodiments will be described in detail with reference to the accompanying drawings. The present invention may, however, be embodied in different forms and should not be construed as limited to the embodiments set forth herein. Rather, these embodiments are provided so that the present invention will be thorough and complete, and will fully convey the scope of the present invention to those skilled in the art. In the figures, the dimensions of layers and regions are exaggerated for clarity of illustration. Like reference numerals refer to like elements throughout.

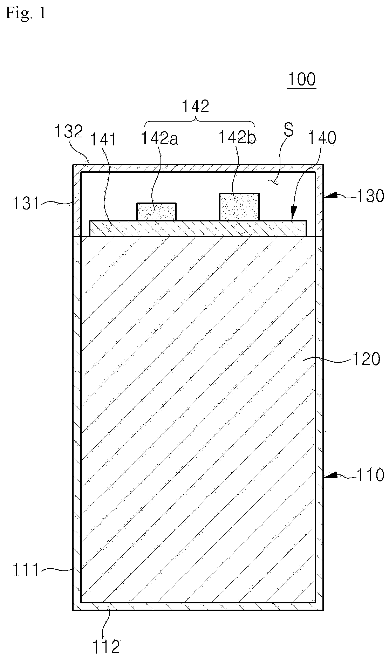

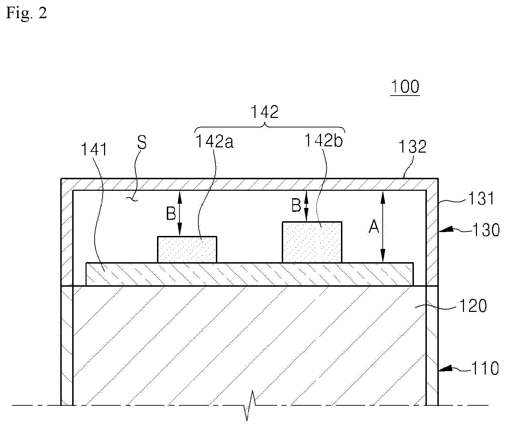

FIG. 1 is a view illustrating a structure of a cell assembly in accordance with an exemplary embodiment, and FIG. 2 is a view illustrating a structure in which an element is spaced apart from a cover in accordance with an exemplary embodiment. Hereinafter, a cell assembly in accordance with an exemplary embodiment will be described.

A cell assembly in accordance with an exemplary embodiment is a device for providing power to an electronic device. Referring to FIG. 1, the cell assembly 100 includes a case 110, a battery cell 120, a cover 130, and an element member 140.

The case 110 includes a first side frame 111 and a lower frame 112. The first side frame 111 defines a circumference of a side surface in an outer appearance of the case 110, and the lower frame 112 is connected to a lower portion of the first side frame 111 to define a lower portion of the outer appearance of the case 110. Thus, an accommodation space may be defined above the lower frame 112. That is, a space surrounded by the lower frame 112 and the first side frame may be the accommodation space. For example, the case may be manufactured in the form of a pouch to define an accommodation space therein, and a top surface of the case may be opened to define a first opening. However, a shape and structure of the case 110 is not limited thereto and may vary.

The battery cell 120 is accommodated in the accommodation space inside the case 110. For example, the battery cell 120 may be provided in a rectangular plate shape along the shape of the accommodation space, and the battery cell 120 may have a volume less than or equal to that of the accommodation space. Thus, the battery cell 120 may be inserted into the accommodation space through the first opening.

In addition, the battery cell 120 has a structure in which a positive electrode and a negative electrode are stacked with a separator therebetween, and a lead part including a negative lead and a positive lead is provided. However, the shape and structure of the battery cell 120 is not limited thereto and may vary.

The cover 130 includes a second side frame 131 and an upper frame 132. The second side frame 131 defines a circumference of a side surface in an outer appearance of the cover 130, and the upper frame 131 is connected to an upper portion of the second side frame 131 to define an upper portion of the outer appearance of the cover 130. Thus, an installation space may be defined between the lower portion of the upper frame 132 and the upper portion of the battery cell 120. That is, a space surrounded by the lower portion of the upper frame 132, the upper portion of the battery cell 120, and the second side frame 131 may be the installation space. Thus, a bottom surface of the cover 130 may be opened to define a second opening.

Also, the cover 130 may be detachably installed on the case 110. That is, the lower portion of the second side frame 131 and the upper portion of the first side frame 111 may be coupled to each other so that the inside of the cover 130 and the case 110 is sealed. Since the first opening is defined in a top surface of the case 110, and the second opening is defined in a bottom surface of the cover 130, the accommodation space and the installation space S may communicate with each other through the openings. However, the shape and structure of the cover 130 is not limited thereto and may vary.

The element member 140 is disposed in the installation space S inside the cover 130. For example, the element member 140 may be a protection circuit module (PCM), and the lead part of the battery cell 120 may be electrically connected. Thus, the element member 140 may detect an abnormal state such as overcharging or overcurrent of the battery cell 120, and when the abnormal state of the battery cell 120 is detected, the battery cell 120 to control the battery cell 120 may be controlled to suppress or prevent heat generation or explosion.

In addition, the element member 140 is vertically spaced apart from the upper frame 132 of the cover 130 in the installation space S. Thus, the element member 140 may be disposed to be closer to the battery cell 120 than the upper frame 132, and a predetermined spaced distance may be defined between the element 142 and the upper frame 132 provided in the element member 140. Thus, when external force is applied to the cover 130, since it is possible to prevent an impact from being directly applied to the element 142, thereby suppressing or preventing the element 142 from being damaged. The element member 140 includes a board 141 and an element 142.

The board 141 may be installed on the battery cell 120. The board 141 may be a printed circuit board (PCB). Thus, the lead part and the element 142 of the battery cell 120 may be mounted on the board 141. An external input/output terminal (not shown) that supplies power to the battery cell 120 or is electrically connected to an external electronic device, which receive the power from the battery cell 120, may be bonded to the board 141. However, the structure of the board 141 is not limited thereto and may vary.

The element 142 may be mounted on the board 141. The element 142 may be configured as a safety element made of an active element or a protection element, in which integrated circuits are provided, to prevent the battery cell 120 from being overheated and exploded due to the overcharging, overdischarging, or overcurrent. For example, the element 142 may include a capacitor 142a and a thermistor 142b.

Also, the element 142 may be disposed to face the upper frame 132 and may be vertically spaced apart from the upper frame 132. Thus, a space capable of absorbing the impact applied to the element 142 by a distance between the element 142 and the upper frame 132 may be defined. As a result, it is possible to protect the element 142 by preventing the external force applied to the cover 130 from being directly transmitted to the element 142.

For example, when the cell assembly 100 falls, and thus the cover 130 collides with the floor, the cover 130 is crushed by the distance between the element 142 and a wall of the cover 130 to absorb the impact. Thus, it is possible to minimize the impact applied to the element 142, which occurs while the cell assembly 100 falls. As a result, the element 142 may be stably protected to suppress or prevent the element 142 from being damaged.

Here, when a distance A in one direction (or in the vertical direction) between the wall and the board 141 of the cover 130 is approximately 1.2 mm or more to approximately 0.8 mm or less, a vertically spaced distance B between the upper frame 132 and the element 142 may be approximately 0.3 mm or more to approximately 0.7 mm or less. If the vertically spaced distance B between the upper frame 132 and the element 142 is less than approximately 0.3 mm, a sufficient space for absorbing the impact applied to the element 142 is not provided, and thus, the element may not be safely protected from the external force. When the vertically spaced distance B between the upper frame 132 and the element 142 exceeds approximately 0.7 m, a size of the cover 130 may become too large to reduce space availability of the cell assembly 100. Therefore, the spaced distance B between the upper frame 132 and the element 142 may be set to prevent the space availability of the cell assembly 100 from being deteriorated while stably protecting the element 142.

The distance to be spaced apart from the upper frame 132 may be set differently in accordance with the elements 142. For example, when the thermistor 142b has better durability than the capacitor 142a, a vertical length of the thermistor 142b may be longer than a vertical length of the capacitor 142a. That is, the vertically spaced distance between the upper frame 132 and the thermistor 142b may be less than the vertical spaced distance between the upper frame 132 and the capacitor 142a. Therefore, when the cover 130 is crushed by impact, the upper frame 132 may collide with the durable thermistor 142b, and the upper frame 132 may not crushed up to a position of the capacitor 142a by the thermistor 142b, and thus, the capacitor 142a may not collie with the upper frame 132. Thus, the element having the weak durability may be more safely protected. However, a method of setting lengths of the elements 142 in one direction is not limited thereto and may vary.

As described above, the upper frame 132 and the element member 140 may be spaced apart from each other to reduce the impact applied to the element member 140 inside the cell assembly 100. Thus, the element member 140 inside the cell assembly 100 may be safely protected and thus be improved in durability. As a result, lifespan of the cell assembly 100 may be extended, and maintenance of the cell assembly 100 may be facilitated.

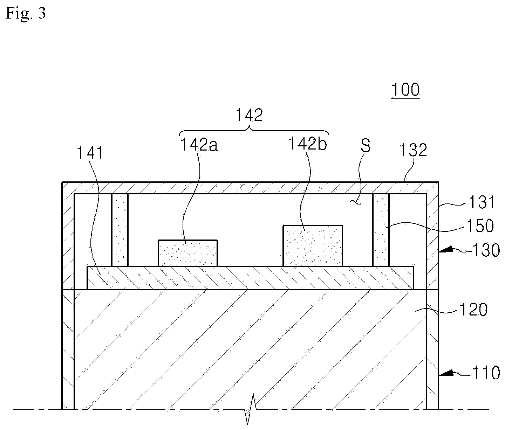

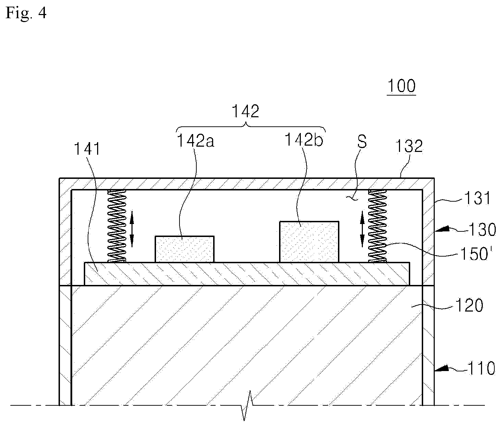

FIG. 3 is a view illustrating a structure in which a support member is installed between the cover and the board in accordance with an exemplary embodiment, and FIG. 4 is a view illustrating a structure in which a support member is installed between a cover and a board in accordance with another exemplary embodiment. Hereinafter, a support member in accordance with an exemplary embodiment will be described.

Referring to FIGS. 3 and 4, the cell assembly 100 may further include a support member 150. The support member 150 is disposed in the installation space S together with the element member 140. The support member 150 may extend in the vertical direction. The support member 150 may have a vertical length longer than that of the element 142 and may be installed between the board 141 and the wall of the cover 130.

For example, as illustrated in FIG. 3, the support member 150 may be provided in a circular bar shape. Since the support member 150 is longer than the element 142 in the vertical direction, the element 142 and the upper frame 132 may be vertically spaced apart from each other by the vertical length between the support member 150 and the element 142. Thus, the support member 150 may stably space the upper frame 132 from the element 142. Thus, even when an impact is applied to the cover 130, since the cover 130 is stably maintained in outer appearance by the support member 150, it is possible to more effectively suppress or prevent the impact from being transmitted to the element 142.

In this case, the support member 150 may be provided in a hollow shape. Thus, a weight may be reduced while the support member 150 spaces the upper frame 132 and the element 142 from each other. Therefore, it is possible to minimize an increase in weight of the cell assembly 100. However, the formation and structure of the support member 150 is not limited thereto and may vary.

In addition, a plurality of support members 150 may be provided. The element 142 may be disposed at a center of the board 141, and the support members 150 may be disposed at an outer portion of the board 141 so as to be disposed along a circumference of the board 141. Thus, the support members 150 may support different portions of the upper frame 132, and thus, the cover 130 may be more stably maintained in outer appearance. However, the structure in which the support members 150 are disposed is not limited thereto and may vary.

Here, the support member 150 may be made of a thermally conductive material. Thus, the support member 150 may provide a path through which heat is transferred from the element member 140 to the cover 130. As a result, heat generated from the element 142 or the battery cell 120 may be transferred to the board 141, and the heat transferred to the board 141 may be transferred to the cover 130 through the support member 150 and then be radiated to the outside. The element 142 or the battery cell 120 may be effectively suppressed or prevented from being overheated by the support member 150.

In addition, when the plurality of support members 150 are provided, heat in different regions of the element member 140 may be radiated to the outside through different support members 150. Thus, the heat of the element member 140 may be uniformly dissipated as a whole, and the element 142 or the battery cell 120 may be suppressed or prevented from being overheated locally.

As illustrated in FIG. 4, a support member 150' may be provided in a shape of which at least a portion is capable of being stretched and contracted in the vertical direction. For example, the support member 150' may be provided in the form of a spring capable of being contracted vertically. Therefore, when an impact is applied to the cover 130, the support member 150' may absorb the impact while being contracted vertically in the installation space S to more suppress or prevent the impact from being transmitted to the element 142.

Here, a vertical length by which the support member 150' is maximally contracted may be longer than that of the element 142. Therefore, even when the support member 150' is contracted, it is possible to prevent a wall of the cover 130 from being in contact with the element 142, thereby preventing the element 142 from being damaged by colliding with the wall of the cover 130.

In addition, the spring-shaped support member 150' may be provided in plurality. Thus, since the support members 150' absorb the impact in different regions, the support members 150' may easily absorb the impact even though the impact is applied to any position of the cover 130. As a result, the support members 150' may more effectively suppress or prevent the impact from being transmitted to the element 142. However, the support member 150' may not be provided in the spring shape, but may be made of a material that is capable of being stretched and contracted, and various combinations are possible between embodiments.

As described above, the support member 150 may stably space the upper frame 132 from the element member 140. Therefore, when the cover 130 receives the impact, the support member 150 may more effectively suppress or prevent the wall of the cover 130 and the element member 140 from colliding with each other. As a result, the element member 140 inside the cell assembly 100 may be safely protected to extend the lifespan of the cell assembly 100 and facilitate the maintenance.

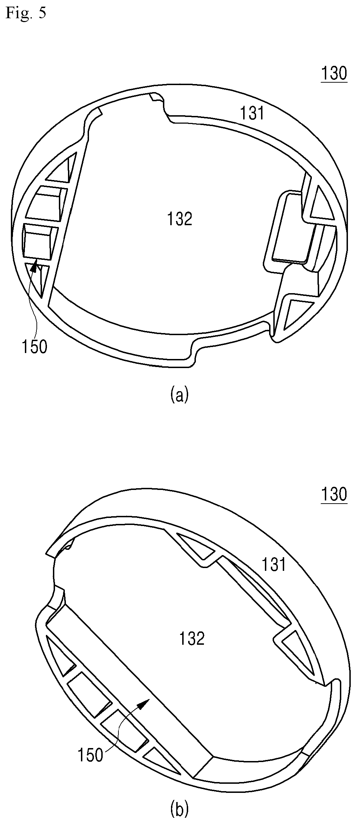

The support member 150 in accordance with an exemplary embodiment may be provided to be integrated with the cover 130 as illustrated in FIG. 5. When an end extending furthest from the upper frame 132 is supported on the top surface of the board 141, a height from the upper frame 132 of the integrally provided support member 150 may be set to be longer than a height of each of the elements 142 protruding upward from the board 141 to protect the elements against the upper impact.

As illustrated in FIG. 5, the support member 150 may have a lattice structure that is spaced a predetermined distance from an inner circumferential portion of the second side frame 131. In this case, the support member 150 may perform a function of reinforcing lateral rigidity of the cover 130.

Unlike the support member 150 illustrated in FIGS. 2 to 4, an end of an extension part in the vertical direction from the upper frame 132 may extend into the space between a side portion of the board 141 and the second side frame 131 without being in contact with the top surface of the board 141. In this case, the height of the support member 150 is defined to be substantially the same as that of the second side frame 131 so that the support member 150 is integrated with the cover 130, and when the cover 130 is assembled with the cell assembly, the end of the extension part in the vertical direction may be coupled and supported on a lower portion of the second side frame 131 and an upper portion of the first side frame 111 so as to be supported by the top surface of the battery cell 120. In this case, the height of the support member 150 and the length of the second side frame 131 are greater than the sum of the height of the element 142 and the thickness of the board 141.

In an exemplary embodiment, additionally, the structure, in which a metal plate 1200 is electrically connected to a printed circuit board, may be improved to provide the cell assembly, of which the rigidity is reinforced, thereby solving the disadvantage that is vulnerable to the external impact. In addition, a bending process may not be performed to prevent assembly errors due to the bending process from occurring, and an insulating tape may not be used to realize cost saving.

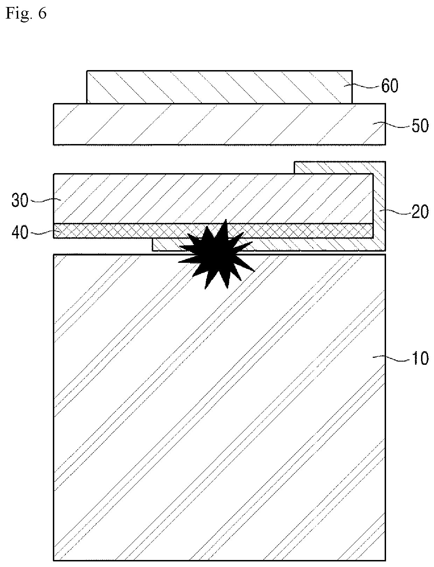

FIG. 6 is a conceptual view illustrating a cylindrical cell assembly in accordance with a related art.

Referring to FIG. 6, a cylindrical cell assembly in accordance with the related art includes a unit cell 10, a metal plate 20, a printed circuit board 30, an insulating tape 40, a cap cover 50, and a foam tape 60.

Specifically, to manufacture the cylindrical cell assembly in accordance with the related art, the metal plate 20 and a positive electrode 10 of the unit cell 10 are welded to each other, and then the metal plate 20 is bent two times to surround a top surface, side surface, and bottom surface of the printed circuit board 30. Then, the insulating tape 40 is disposed between the metal plate 20 and the bottom surface of the printed circuit board 30. Thereafter, the cap cover 50 is assembled on the printed circuit board 30, and the foam tape 60 was attached on the cap cover 50.

The cylindrical cell assembly in accordance with the related art has a disadvantage in that rigidity is weak due to a bending assembly tolerance, assembly strength, etc., and thus, the cell assembly is vulnerable to the external impact, and costs increase due to additional costs of the insulating tape 40.

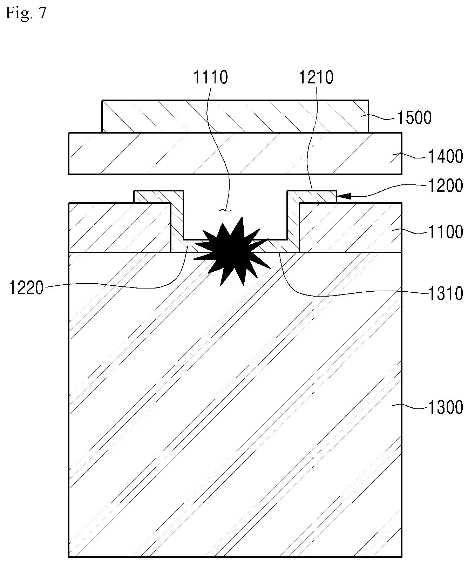

FIG. 7 is a conceptual view illustrating a cylindrical cell assembly in accordance with an exemplary embodiment, which illustrates a structure of improving the above-described disadvantage.

Referring to FIG. 7, a cell assembly in accordance with an exemplary embodiment includes a printed circuit board 1100, a metal plate 1200, and a unit cell 1300.

The printed circuit board 1100 is provided with a hole 1110 in a center thereof. The printed circuit board 1100 is a portion for a surface-mount technology (SMT) of a circuit element. The central hole 1110 is a portion in which the metal plate 1200 is installed (or assembled).

The metal plate 1200 has an upper end 1210, which is caught on a top surface of the printed circuit board 1100, and a lower end, which is exposed to a bottom surface of the printed circuit board 1100 through the hole 1110 so as to be installed on the printed circuit board 1100. The metal plate 1200 constitutes an integrated protection circuit module (PCM) together with the printed circuit board 1100.

The unit cell 1300 is disposed under the printed circuit board 1100 and includes a welding part 1310 that is welded to at least a partial area of the metal plate 1200, which is exposed through the hole 1110.

In the cell assembly in accordance with an exemplary embodiment, due to the above-described structure, fixing force between the protection circuit module (PCM) and the cell may be strengthened, the assembly tolerances due to the bending process of the cell assembly in accordance with the related art may be prevented from occurring, and the separate insulating tape is not required. Therefore, it is possible to reduce the costs and secure a smaller full-length dimension of a pack to meet customer needs.

As one example, in the unit cell 1300, a positive electrode is disposed on the welding part 1310. That is, the welding part 1310 is a portion at which the positive electrode of the cell 1300 and the metal plate 1200 are welded to each other.

The metal plate 1200 is in direct contact with the inside of the hole 1110 of the printed circuit board 1100. In an exemplary embodiment, the term "direct contact" means that no other member is included between the metal plate 1200 and the inner side of the hole 1110.

In one embodiment, an upper end 1210 of the metal plate 1200 may be spaced a predetermined distance from an edge of the top surface of the printed circuit board 1100. Since the bending process of the cylindrical cell assembly in accordance with the related art is not performed, the metal plate 1200 may be disposed to be spaced apart from the edge of the printed circuit board 1100. On the other hand, referring to FIG. 6, since the cylindrical assembly in accordance with the related art undergoes the bending process, the metal plate 20 is disposed to surround the edge of the printed circuit board 30.

As another example, the metal plate 1200 has a welding surface welded to the printed circuit board 1100. For example, the welding surface may be a surface that is in direct contact with the inside of the hole 1110.

The unit cell in accordance with an exemplary embodiment may be a cylindrical unit cell. As a component of the cylindrical unit cell, various known materials are used, and there is no particular limitation.

In addition, the cell assembly in accordance with the present application includes a cell cover (not shown) surrounding an exterior of the cell and a cap cover 1400 assembled with the cell cover while covering an upper portion of the board.

In addition, the cell assembly may include a foam tape 1500 adhering to an upper portion of the cap cover 1500. The foam tape 1500 implements a degree of freedom of an overall dimension through compression and serves to protect the cell assembly from an external impact.

The meanings of the symbols used in the description and drawings of the present invention are as follows.

| | | | |
|---|---|---|---|
| 100: | cell assembly | 110: | case |
| 120, 1300: | battery cell | 130: | cover |
| S: | installation space | 140: | element member |
| 141, 1100: | board(PCB) | 142: | element |
| 150: | support member | 1200: | metal plate |

## Claims

1. A cell assembly (100) comprising:
a case (110) constituted by a first side frame (111) and a lower frame (112) to define an accommodation space above the lower frame (112);
a battery cell (120) accommodated in the accommodation space;
a cover (130) constituted by a second side frame (131) and an upper frame (132) so that the second side frame (131) is coupled to the first side frame (111), the cover (130) being installed on the case (110) to define an installation space (S) between a lower portion of the upper frame (132) and an upper portion of the battery cell (120); and
an element member (140) disposed in the installation space (S) and spaced vertically from the upper frame (132).
wherein:
the element member (140) is disposed closer to the battery cell (120) than the upper frame (132) so that a predetermined spaced distance (B) is defined between the upper frame (132) and an element (142) provided in the element member (140),
the element member (140) comprises:
a board (141) installed on the battery cell (120); and
an element (142) spaced vertically from the upper frame (132) and installed on the board (141),
the cell assembly being **characterized in that** the cell assembly (100) further comprises a support member (150) having a vertical length greater than that of the element (142) and being installed between the board (141) and the upper frame (132), at least a portion of the support member (150) is stretchable and contractible vertically to absorb an impact.

2. The cell assembly (100) of claim 1, wherein the predetermined spaced distance (B) between the upper frame (132) and the element (142) is approximately 0.3 mm or more to approximately 0.7 or less.

3. The cell assembly (100) of claim 1, wherein the support member (150) is integrated with the cover (130) and has a lattice structure that extends from an inner circumferential portion of the second side frame (131),
wherein the vertical length of the support member (150) is greater than the sum of a vertical length of the electrode and a thickness of the board (141), and
a space is defined between a side portion of the board (141) and the second side frame (131).

4. The cell assembly (100) of claim 1, wherein the support member (150) has a path through which heat is transferred from the element member (140) to the cover (130).

5. The cell assembly (100) of any one of claims 1 to 3, wherein the board (141) comprises a printed circuit board (1100), and
the printed circuit board (1100) has a hole (1110) at a center thereof,
wherein the cell assembly (100) further comprises:
a metal plate (1200) having an upper end (1210), which is caught on a top surface of the printed circuit board (1100), and a lower end, which is exposed to a bottom surface of the printed circuit board (1100) through the hole (1110) so as to be installed on the printed circuit board (1100); and
a unit cell (1300) disposed under the printed circuit board (1100) and comprising a welding part (1310) that is welded to at least a partial area of the metal plate (1200), which is exposed through the hole (1110).

## Patentansprüche

1. Zellenanordnung (100), umfassend:
ein Gehäuse (110), welches durch einen ersten Seitenrahmen (111) und einen unteren Rahmen (112) gebildet ist, um einen Aufnahmeraum oberhalb des unteren Rahmens (112) zu definieren;
eine Batteriezelle (120), welche in dem Aufnahmeraum aufgenommen ist;
eine Abdeckung (130), welche durch einen zweiten Seitenrahmen (131) und einen oberen Rahmen (132) gebildet ist, so dass der zweite Seitenrahmen (131) mit dem ersten Seitenrahmen (111) gekoppelt ist, wobei die Abdeckung (130) an dem Gehäuse (110) installiert ist, um einen Installationsraum (S) zwischen einem unteren Abschnitt des oberen Rahmens (132) und einem oberen Abschnitt der Batteriezelle (120) zu definieren; und
eine Elementkomponente (140), welche in dem Installationsraum (S) angeordnet und vertikal von dem oberen Rahmen (132) beabstandet ist,
wobei:
die Elementkomponente (140) näher zu der Batteriezelle (120) als der obere Rahmen (132) angeordnet ist, so dass eine vorbestimmte beabstandete Distanz (B) zwischen dem oberen Rahmen (132) und einem Element (142) definiert ist, welches in der Elementkomponente (140) bereitgestellt ist, wobei die Elementkomponente (140) umfasst:
eine Platine (141), welche an der Batteriezelle (120) installiert ist; und
ein Element (142), welches vertikal von dem oberen Rahmen (132) beabstandet und an der Platine (141) installiert ist,
wobei die Zellenanordnung **dadurch gekennzeichnet ist, dass** die Zellenanordnung (100) ferner ein Trageelement (150) umfasst, welches eine vertikale Länge aufweist, welche größer als diejenige des Elements (142) ist, und zwischen der Platine (141) und dem oberen Rahmen (132) installiert ist, wobei wenigstens ein Abschnitt des Trageelements (150) vertikal streckbar und zusammenziehbar ist, um einen Aufprall zu absorbieren.

2. Zellenanordnung (100) nach Anspruch 1, wobei die vorbestimmte beabstandete Distanz (B) zwischen dem oberen Rahmen (132) und dem Element (142) etwa 0,3 mm oder mehr bis etwa 0,7 oder weniger beträgt.

3. Zellenanordnung (100) nach Anspruch 1, wobei das Trageelement (150) mit der Abdeckung (130) integriert ist und eine Gitterstruktur aufweist, welche sich von einem inneren Umfangsabschnitt des zweiten Seitenrahmens (131) erstreckt,
wobei die vertikale Länge des Trageelements (150) größer als die Summe einer vertikalen Länge der Elektrode und einer Dicke der Platine (141) ist, und
ein Raum zwischen einem Seitenabschnitt der Platine (141) und dem zweiten Seitenrahmen (131) definiert ist.

4. Zellenanordnung (100) nach Anspruch 1, wobei das Trageelement (150) einen Pfad aufweist, durch welchen Wärme von der Elementkomponente (140) zu der Abdeckung (130) übertragen wird.

5. Zellenanordnung (100) nach einem der Ansprüche 1 bis 3, wobei die Platine (141) eine gedruckte Schaltungsplatine (1100) umfasst, und
die gedruckte Schaltungsplatine (1100) ein Loch (1110) an einer Mitte davon aufweist,
wobei die Zellenanordnung (100) ferner umfasst:
eine Metallplatte (1200), welche ein oberes Ende (1210), welches an einer oberen Fläche der gedruckten Schaltungsplatine (1100) gefangen ist, und ein unteres Ende aufweist, welches zu einer unteren Fläche der gedruckten Schaltungsplatine (1100) durch das Loch (1110) freigelegt ist, um so an der gedruckten Schaltungsplatine (1100) installiert zu sein; und
eine Einheitszelle (1300), welche unter der gedruckten Schaltungsplatine (1100) angeordnet ist und einen Schweißteil (1310) umfasst, welcher an wenigstens einen teilweisen Bereich der Metallplatte (1200) geschweißt ist, welcher durch das Loch (1110) freigelegt ist.

## Revendications

1. Ensemble cellule (100), comprenant :
un boîtier (110) constitué d'un premier support latéral (111) et d'un support inférieur (112) permettant de définir un espace de réception au-dessus du support inférieur (112) ;
une cellule de batterie (120) reçue dans l'espace de réception ;
un couvercle (130) constitué d'un second support latéral (131) et d'un support supérieur (132) de sorte que le second support latéral (131) soit accouplé au premier support latéral (111), le couvercle (130) étant installé sur le boîtier (110) pour définir un espace d'installation (S) entre une partie inférieure du support supérieur (132) et une partie supérieure de la cellule de batterie (120) ; et
un organe d'élément (140) disposé dans l'espace d'installation (S) et espacé verticalement du support supérieur (132),
dans lequel :
l'organe d'élément (140) est disposé plus près de la cellule de batterie (120) que le support supérieur (132) de sorte qu'une distance d'espacement (B) prédéterminée est définie entre le support supérieur (132) et un élément (142) prévu dans l'organe d'élément (140),
l'organe d'élément (140) comprend :
une carte (141) installée sur la cellule de batterie (120) ; et
un élément (142) espacé verticalement du support supérieur (132) et installé sur la carte (141),
l'ensemble cellule étant **caractérisé en ce que** l'ensemble cellule (100) comprend en outre un organe de support (150) ayant une longueur verticale supérieure à celle de l'élément (142) et étant installé entre la carte (141) et le support supérieur (132), au moins une partie de l'organe de support (150) est extensible et rétractable verticalement pour absorber un choc.

2. Ensemble cellule (100) selon la revendication 1, dans lequel la distance d'espacement (B) prédéterminée entre le support supérieur (132) et l'élément (142) est d'environ 0,3 mm ou plus à environ 0,7 mm ou moins.

3. Ensemble cellule (100) selon la revendication 1, dans lequel l'organe de support (150) est intégré au couvercle (130) et présente une structure en treillis qui s'étend à partir d'une partie circonférentielle intérieure du second support latéral (131),
dans lequel la longueur verticale de l'organe de support (150) est supérieure à la somme d'une longueur verticale de l'électrode et d'une épaisseur de la carte (141), et
un espace est défini entre une partie latérale de la carte (141) et le second support latéral (131).

4. Ensemble cellule (100) selon la revendication 1, dans lequel l'organe de support (150) présente un trajet par lequel la chaleur est transférée de l'organe d'élément (140) au couvercle (130).

5. Ensemble cellule (100) selon l'une quelconque des revendications 1 à 3, dans lequel la carte (141) comprend une carte de circuit imprimé (1100), et
la carte de circuit imprimé (1100) est percée d'un trou (1110) en son centre,
dans lequel l'ensemble cellule de batterie (100) comprend en outre :
une plaque métallique (1200) ayant une extrémité supérieure (1210), qui est emprisonnée sur une surface supérieure de la carte de circuit imprimé (1100), et une extrémité inférieure, qui est exposée à une surface inférieure de la carte de circuit imprimé (1100) à travers le trou (1110) de manière à être installée sur la carte de circuit imprimé (1100) ; et
une cellule unitaire (1300) disposée sous la carte de circuit imprimé (1100) et comprenant une pièce à souder (1310) qui est soudée à au moins une zone partielle de la plaque métallique (1200), qui est exposée à travers le trou (1110).
